# EUROPEAN PATENT SPECIFICATION

(11) **EP 1 741 261 B1**
(45) Date of publication and mention of the grant of the patent: **20.10.2010**
(21) Application number: 05732760.3
(22) Date of filing: 14.04.2005
(51) Int. Cl.: H04L 29/06

(54) **SYSTEM AND METHOD FOR MAXIMIZING CONNECTIVITY DURING NETWORK FAILURES IN A CLUSTER SYSTEM**
SYSTEM UND VERFAHREN ZUR MAXIMIERUNG VON KONNEKTIVITÄT WÄHREND NETZWERKAUSFÄLLEN IN EINEM CLUSTER-SYSTEM
SYSTEME ET PROCEDE PERMETTANT DE MAXIMALISER LA CONNECTIVITE PENDANT DES PANNES DE RESEAU DANS UN SYSTEME EN GRAPPES

(30) Priority: 28.04.2004 US 833650
(43) Date of publication of application: 10.01.2007
(73) Proprietor: Check Point Software Technologies Inc., Redwood City, CA 94065 (US)
(72) Inventor: HUNT, Peter, Frederick, Sunnyvale, CA 94086 (US); SUBRAMANIAN, Anand, Sunnyvale, CA 94085 (US)
(74) Representative: Ruuskanen, Juha-Pekka
(86) International application number: PCT/IB2005/001004
(87) International publication number: WO 2005/107209

(56) References cited:
- US-A1- 2004 019 820
- US-A1- 2004 078 481
- US-B1- 6 570 881

## Description

### Field of the Invention

The present invention relates to computing systems, and in particular, to a system and method for maximizing network connectivity after a network failure in a network clustering system.

### Background

Computing systems are becoming increasingly more important to the success of many businesses today. As computer systems and their related networking infrastructure become more important, the availability of such systems becomes critical. A failure in the business's computer systems, and/or their networking infrastructure may result in catastrophic costs to the business.

In response to this need for a computing infrastructure that provides both high availability of computer system resources and protection from failures, cluster architecture was developed. A cluster may be defined as multiple loosely coupled network devices that cooperate to provide client devices access to a set of services, resources, and the like, over the network. Members in the cluster may be employed to increase the reliability and availability of the access.

Many cluster architectures rely on an exchange of a cluster heartbeat message (sometimes known as a keepalive message) between members at some interval that may vary according to a packet loss, or the like, on a network. The cluster may utilize these keepalive messages to manage cluster membership, assign work, and detect member failure. If such keepalive messages are not received from a member of the cluster within some predetermined timeout period, the non-responding cluster member may be forced to leave the cluster.

This response may be appropriate where a single cluster member fails to respond, if a cluster member's network device fails, or the like. However, if all cluster members are connected to the same network equipment, such as a switch, hub, and the like, and that network equipment fails, say due to a failure of a switch, hub, then all cluster members may leave the cluster system. This behavior may result in a complete loss of connectivity to, all remaining networks serviced by the cluster system. Unfortunately, increasing network equipment redundancy may be too costly for many businesses as a solution. Therefore, there is a need in the industry for a highly reliable clustering infrastructure. Thus, it is with respect to these considerations, and others, that the present invention has been made.

A network device in accordance with the invention is defined in the independent claim 1. A method for managing a network failure in accordance with the invention is defined in independent claim 11. A system for managing a network failure in a cluster system accordance with the invention is defined in independent claim 14. Apparatuses in accordance with the invention are defined in the independent claims 21 and 22. More specific embodiments of the invention are defined in dependent claims 2 to 10, 11 to 13, and 15 to 20.

### Brief Description of the Drawings

Non-limiting and non-exhaustive embodiments of the present invention are described with reference to the following drawings. In the drawings, like reference numerals refer to like parts throughout the various figures unless otherwise specified.

For a better understanding of the present invention, reference will be made to the following Detailed Description of the Invention, which is to be read in association with the accompanying drawings, wherein:
FIGURE 1 illustrates one embodiment of an environment in which the invention operates;
FIGURE 2 illustrates a functional block diagram of one embodiment of a network device configured as a cluster member;
FIGURES 3A-3B illustrate flow diagrams generally showing one embodiment of a process for cluster establishment;
FIGURES 4A-4E illustrate flow diagrams generally showing one embodiment of processes for a cluster master managing a cluster membership; and
FIGURE 5 illustrates a flow diagram generally showing one embodiment of a process of a cluster member (client) managing a connectivity communication with the cluster master, according to one embodiment of the invention.

### Detailed Description of the Preferred Embodiment

The present invention now will be described more fully hereinafter with reference to the accompanying drawings, which form a part hereof, and which show, by way of illustration, specific exemplary embodiments by which the invention may be practiced. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

The terms "comprising," "including," "containing," "having," and "characterized by," refers to an open-ended or inclusive transitional construct and does not exclude additional, unrecited elements, or method steps. For example, a combination that comprises A and B elements, also reads on a combination of A, B, and C elements.

The meaning of "a," "an," and "the" include plural references. The meaning of "in" includes "in" and "on." Additionally, a reference to the singular includes a reference to the plural unless otherwise stated or is inconsistent with the disclosure herein.

The term "or" is an inclusive "or" operator, and includes the term "and/or," unless the context clearly dictates otherwise.

The phrase "in one embodiment," as used herein does not necessarily refer to the same embodiment, although it may. Similarly, the phrase "in another embodiment," as used herein does not necessarily refer to a different embodiment, although it may.

The term "based on" is not exclusive and provides for being based on additional factors not described, unless the context clearly dictates otherwise.

The term "packet" includes an IP (Internet Protocol) packet.

Briefly stated, the present invention is directed to a system, apparatus, and method for maximizing the network connectivity of the cluster after a failure of a network interface or piece of network equipment, such as a local area network (LAN) switch, hub, and the like.

A network device in the cluster, designated as a cluster master, is configured to determine cluster membership based, in part, on the connectivity of the cluster members. Another network device is configured to exchange information about its connectivity to the cluster master. The cluster master compares the received information to determine whether the network device has different connectivity than the cluster. If the network device has different connectivity, the cluster master may deny cluster membership to the network device. By rejecting network devices with different connectivity, the invention ensures that data received by the cluster may be delivered with substantially equal reliability by virtually any of the cluster members.

Thus, if a cluster member loses connectivity to a network, and at least one cluster member still retains connectivity to that network, then the cluster master may force the failed member to leave the cluster. If connectivity of the leaving cluster member is later restored, or if all cluster members later lose connectivity to that network, or the like, then the cluster member may rejoin the cluster. If the cluster master itself loses connectivity to a network, it may leave the cluster, and a set of cluster members with the greatest connectivity may reform a new cluster with a new cluster master.

Furthermore, if all cluster members lose connectivity to the same network, the cluster membership may remain unchanged, and the cluster members may continue to provide connectivity to the remaining network. This approach then, ensures that the clustering system comprises members, which have a maximum connectivity to an adjacent network.

### Illustrative Operating Environment

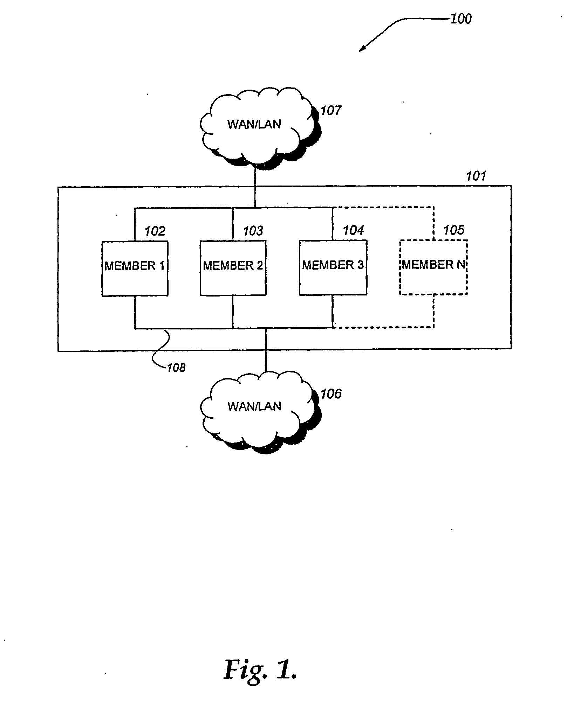

FIGURE 1 illustrates one embodiment of an environment in which the invention operates. Not all the components may be required to practice the invention, and variations in the arrangement and type of the components may be made without departing from the scope of the invention.

As shown in the figure, cluster system 100 includes Local Area Network / Wide Area Networks (LAN/WANs) 106 and 107 and cluster 101. Cluster 101 includes cluster members 102-105. Cluster 101 is in communication with LAN/WANs 106 and 107.

Cluster members 102-105 may be in communication with LAN/WANs 106 and 107 through a plurality of networks. For example, although not illustrated, a plurality of network connections may exist between cluster members 102-105 and LAN/WAN 107. A plurality of network connections may further exist between cluster members 102-105 and LAN/WAN 106. However, for clarity, only protocol network 108 is illustrated in FIGURE 1. Protocol network 108 includes virtually any network, including its interconnections, and the like, that is employed for an exchange of a cluster protocol message. Protocol network 108 may be selected based on a variety of mechanisms, including but not limited to, pre-configuring a network to be the protocol network. Protocol network 108 may also be selected dynamically, based on any of a variety of characteristics, including quality of service, throughput, stability, speed, and the like. Moreover, each cluster member 102-105 may select a different protocol network 108 from another cluster member 102-105.

Cluster 101 typically is configured to include loosely coupled network devices that may cooperate to provide another device with access to a service, resource, and the like. In one embodiment, cluster 101 is configured to optimize message throughput by adaptively load balancing cluster members 102-105.

Cluster members 102-105 may be any network device capable of sending and receiving a packet over the network in a cluster architecture. In one embodiment, cluster members 102-105 are configured to operate as a protocol stack processor for a received message packet. The set of such devices may include devices that typically connect using a wired communications medium such as personal computers, multiprocessor systems, microprocessor-based or programmable consumer electronics, network appliances, network PCs, servers, and the like, that are configured to operate as a cluster device. The set of such devices may also include devices that typically connect using a wireless communications medium such as cell phones, smart phones, pagers, walkie talkies, radio frequency (RF) devices, infrared (IR) devices, CBs, integrated devices combining one or more of the preceding devices, and the like, that are configured as a cluster device. Alternatively, cluster members 102-105 may be any device that is capable of connecting using a wired or wireless communication medium such as a laptop, personal computer, network PC, network appliance, PDA, POCKET PC, wearable computer, and any other device that is equipped to communicate over a wired and/or wireless communication medium, operating as a cluster device.

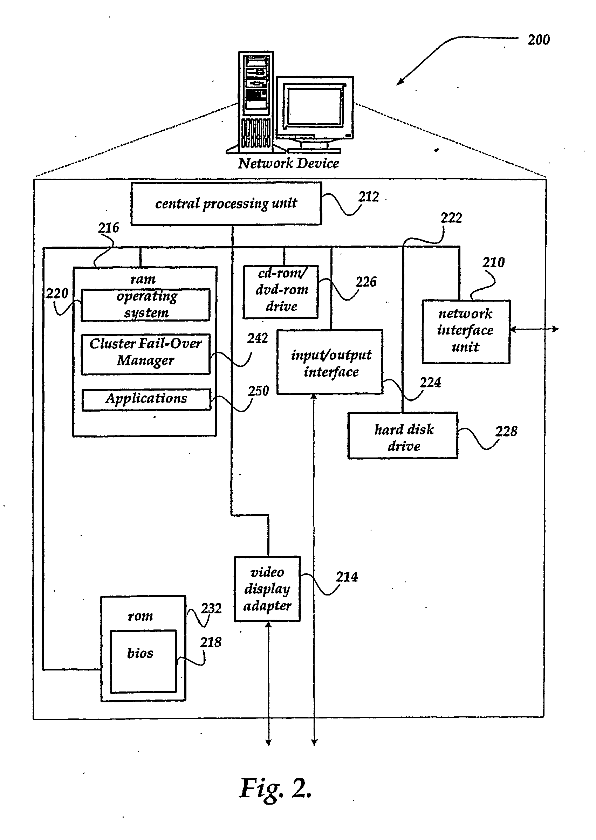

A member of cluster members 102-105 may be configured to operate as a cluster master, where remaining members of cluster members 102-105 may be configured to operate as client or cluster members. Cluster 101 is not limited to a single master, and another member in cluster members 102-105, may be configured to operate as a backup cluster master, without departing from the scope of the present invention. Cluster members 102-105 may also elect a member as a cluster master dynamically, when the cluster is formed and subsequently after a cluster master failure, loss in connectivity, and the like. One embodiment of cluster members 102-105 is described in more detail below, in conjunction with FIGURE 2.

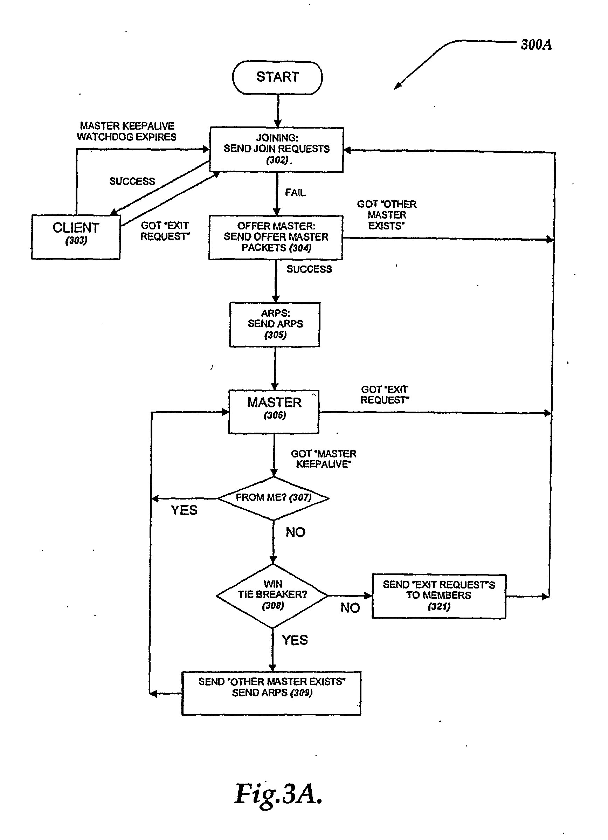

A cluster master may be selected from those cluster members within cluster members 102-105 with substantially equal connectivity as a first cluster member to join the cluster. The cluster master may also be selected based on a highest-performing member of cluster members 102-105 to join the cluster. However, the invention is not constrained to these mechanisms, and virtually any other mechanism, combination of mechanisms, or the like, may be employed to select the cluster master, without departing from the scope of the invention. One embodiment of a process for selecting a cluster master is described in conjunction with FIGURES 3A-3B.

The cluster master may be configured to accept, reject, and the like, other network devices as cluster members, assign work to cluster members, detect cluster member failure, and the like. The cluster master may further determine and alter cluster membership based, in part, on connectivity of a member to an adjacent network.

Moreover, the cluster master may select members to cluster 101 based on them having the same connectivity. This may be directed towards ensuring that data received by cluster 101 may be delivered with substantially equal reliability by any of members 102-105. Furthermore, the cluster master may change cluster 101's membership with the intent of maximizing cluster 101's connectivity, by preferring members with a greater connectivity over those with a lesser connectivity. In one embodiment, such preference may even result in removal of the current cluster master.

Cluster members 102-105 may be configured to communicate to the cluster master information associated with its connectivity. Such connectivity information may be provided to the cluster master when the cluster member joins cluster 101, when an event arises, such as a change in the connectivity of the cluster member, periodically, and the like. Whenever the connectivity of a cluster member changes, it notifies the cluster master of the change, so that the cluster master may determine the new cluster membership. Because these notifications may be delayed due to a variety of reasons, the cluster master may receive the same connectivity change information from different cluster members at different times. To avoid needless cluster membership changes, the cluster master may be further configured to employ a connectivity timer, or the like, to delay making a cluster membership change until substantially all notifications have been received. However, the cluster master is not constrained to employing a connectivity timer, and other mechanisms may be employed to avoid the above problem, without departing from the scope of the present invention.

LAN/WANs 106 and 107 are enabled to employ any form of computer readable media for communicating information from one electronic device to another. In addition, LAN/WANs 106 and 107 can include the Internet in addition to local area networks (LANs), wide area networks (WANs), direct connections, such as through a universal serial bus (USB) port, other forms of computer-readable media, and any combination thereof. On an interconnected set of LANs, including those based on differing architectures and protocols, a router acts as a link between LANs, enabling messages to be sent from one to another. Also, communication links within LANs typically include twisted wire pair or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art. Furthermore, remote computers and other related electronic devices could be remotely connected to either LANs or WANs via a modem and temporary telephone link. In essence, LAN/WANs 106 and 107 may include any communication method by which information may travel between network devices.

Typically, LAN/WAN 106 may include a content server, application server, and the like, to which cluster 101 enables access to for another network device residing within LAN/WAN 107. Similarly LAN/WAN 107 may include a content server, application server, and the like, to which cluster 101 enables access to for another network device residing within LAN/WAN 106.

FIGURE 2 illustrates a functional block diagram of one embodiment of a network device 200, which may operate as a cluster member (including a cluster master, as virtually any cluster member may be configured to become a cluster master). Network device 200 may include many more or less components than those shown. The components shown, however, are sufficient to disclose an illustrative embodiment for practicing the invention.

Network device 200 includes processing unit 212, video display adapter 214, and a mass memory, all in communication with each other via bus 222. The mass memory generally includes RAM 216, ROM 232, and one or more permanent mass storage devices, such as hard disk drive 228, tape drive, optical drive, and/or floppy disk drive. The mass memory stores operating system 220 for controlling the operation of network device 200. Any general-purpose operating system may be employed. Basic input/output system ("BIOS") 218 is also provided for controlling the low-level operation of network device 200.

As illustrated in FIGURE 2, network device 200 also can communicate with the Internet, or some other communications network, such as LAN/WANS 106 and 107, and protocol network 108 of FIGURE 1, via network interface unit 210, which is constructed for use with various communication protocols including the TCP/IP protocol. Network interface unit 210 is sometimes known as a Network Interface Card "NIC," a transceiver or transceiving device.

The mass memory as described above illustrates a type of computer-readable media, namely computer storage media. Computer storage media may include volatile, nonvolatile, removable, and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a network device.

In one embodiment, the mass memory stores program code and data for implementing operating system 220. The mass memory may also store additional program code and data for performing the functions of network device 200. One or more applications 250, and the like, may be loaded into mass memory and run on operating system 220. As shown in the figure, cluster fail-over manager 242 is an example of an application that may run on operating system 220.

Briefly, cluster fail-over manager 242 may be configured to perform actions directed towards maximizing network connectivity after a network failure in a network clustering system, such as cluster 101 of FIGURE 1. Cluster fail-over manager 242 may further be configured to enable network device 200 to operate as a cluster master, a backup cluster master, or a cluster member, as appropriate. Cluster fail-over manager 242 may perform actions substantially similar to those described below in conjunction with FIGURES 3A-3B, 4A-4E, and FIGURE 5.

Although not shown, applications 250 may include program code and data to further perform functions of a cluster member, cluster master, and the like, including but not limited to routing data packets, managing loads across the cluster, assigning work to other cluster members, and the like.

Network device 200 may also include an SMTP handler application for transmitting e-mail, an HTTP handler application for receiving and handing HTTP requests, and an HTTPS handler application for handling secure connections. The HTTPS handler application may initiate communication with an external application in a secure fashion. Network device 200 is not limited however, to these handler applications, and many other protocol handler applications may be employed by network device 200 without departing from the scope of the invention.

Network device 200 may also include input/output interface 224 for communicating with external devices, such as a mouse, keyboard, scanner, or other input devices not shown in FIGURE 2. Likewise, network device 200 may further include additional mass storage facilities such as CD-ROM/DVD-ROM drive 226 and hard disk drive 228. Hard disk drive 228 is utilized by network device 200 to store, among other things, application programs, databases, and the like.

### Cluster Connectivity Representation and Comparison

As described above, cluster membership may be determined based on a connectivity of a network device to an adjacent network. A network device may be said to 'have connectivity' to an adjacent network when a) the network device is directly connected to the adjacent network by way of a cable, LAN equipment, and the like, rather than through a router, gateway, network address translator (NAT), or the like; and b) the network device can exchange data with virtually all other network devices that have connectivity to that adjacent network, including other cluster members.

A mechanism employed by a network device to determine connectivity maybe implementation dependent, and is outside the scope of this invention. However, typical mechanisms employed may include, but clearly, are not limited to examining a link state of the network device connected to the network, periodically sending an echo request (such as a ping) to another network device connected to the network, and the like.

Each cluster member may send information about its connectivity to the cluster master. The connectivity information sent by the cluster member may include virtually any information describing a network connection. In one embodiment, the connectivity information includes a set of connectivity information, such as {***network, active***}, where ***network*** indicates the network that the connectivity information describes. It may include, but is not limited to a network address, network mask length (e.g., 10.1.2.0/24), and the like. ***Active*** in the set of connectivity information indicates whether the network device has connectivity to the identified ***network.*** In one embodiment, ***active*** is a single-bit value, where one value (e.g. "1") indicates connectivity, and a second value (e.g., "0") indicates no connectivity to the ***network.***

The cluster master may store this connectivity information in a data store, such as a database, text file, folder, and the like. The cluster master may compare the received connectivity information to that of other cluster members to determine whether to perform a cluster membership change. The cluster master may compare the sets of connectivity information from several network devices to determine whether a network device has greater, substantially the same, or less connectivity than other network devices in the cluster.

The cluster master may employ the following guidelines to compare connectivity. The cluster master may consider a network device to have greater connectivity than the cluster, where a) the network device is configured for the same set of networks as the cluster, and b) it has connectivity to a greater number of networks than the cluster.

The cluster master may consider a network device to have the same connectivity as the cluster, where a) it is configured for the same set of networks as the cluster, and b) it has connectivity to the same set of networks as the cluster.

Similarly, the cluster master may consider a network device to have less connectivity than the cluster where a) it is configured for a different set of networks than the cluster, or b) it has connectivity to fewer networks than the cluster, or c) it has connectivity to the same number of networks, but not the same set of networks, as the cluster.

The present invention, however, is not constrained to the above guidelines, and other guidelines may be employed to compare connectivity information between network devices, without departing from the scope or spirit of the invention.

Where a network device is configured for a different set of networks than the cluster - even a greater number of networks - the cluster master may select not to accept it as a cluster member, as it may be considered misconfigured. Similarly, where a network device has connectivity to the same number of networks, but to a different set of networks from the cluster, then the cluster master may reject the network device in favor of an existing cluster member to avoid unnecessary cluster membership changes.

### Illustrative Operation for Managing a Cluster System Establishment

One embodiment of a general operation of the present invention is next described by reference to a cluster establishment, including how a network device may join, and leave the cluster.

FIGURES 3A-3B illustrate flow diagrams generally showing one embodiment of a process for cluster establishment. Process 300A begins, after a start block at block 302 when a network device tries to join the cluster. In one embodiment, this is accomplished by sending a "join request" message on a protocol network. In one embodiment, the "join request" message is broadcast over the protocol network. The "join request" message may include connectivity information that identifies the networks that the network device is configured for, and further describes whether the network device has connectivity to those networks. The "join request" may also include authentication information.

If, a cluster master exists and it receives the "join request," it attempts to authenticate the message. If the cluster master determines the authentication information is invalid, it may send a "join failed" message over the protocol network to the joining network device.

If however, the cluster master determines that the authentication information is valid, it then compares the connectivity information of the joining network device with connectivity information associated with the cluster. If the cluster master determines that the joining network device has the same connectivity as the cluster, the cluster master may send an "OK to join" message over the protocol network to the joining network device.

If an "OK to join" message is received by the joining network device, process 300A flows to block 303, where the joining network device is designated as a cluster member (sometimes known as a client or non-master).

At block 303, a cluster member may subsequently leave the cluster and attempt to rejoin if it detects that the cluster master is dead, if it receives an "exit request" message from the cluster master, or the like. In any event, if a cluster member attempts to rejoin the cluster, processing returns to block 302.

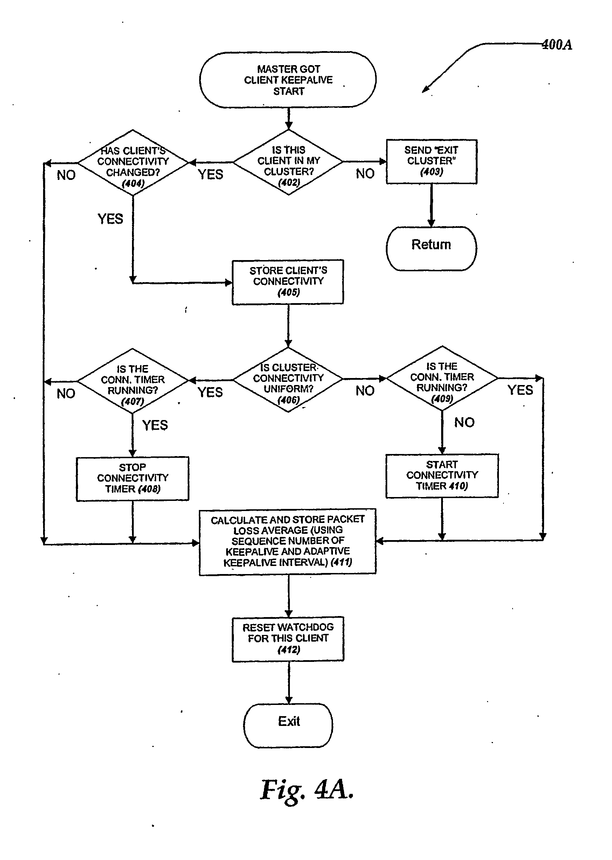

At block 302, however, if the cluster master determines that the joining system has lesser connectivity than the cluster, the cluster master may send a "join failed" message over the protocol network to the joining network device, and the cluster membership remains unchanged (one embodiment of a process for this is described in more detail below in conjunction with FIGURES 4A-4E). The joining network device may then attempt to rejoin the cluster after a predetermined interval, and/or when its connectivity changes, or the like.

In any event, if the network device sending out the join request message does not get a "OK to join" message or a "join failed" message from a cluster master, the network device may conclude that it is the first member of the cluster (e.g., no cluster master exists), and processing flows to block 304. Additionally, if a master election mechanism is dynamic then processing also proceeds to block 304.

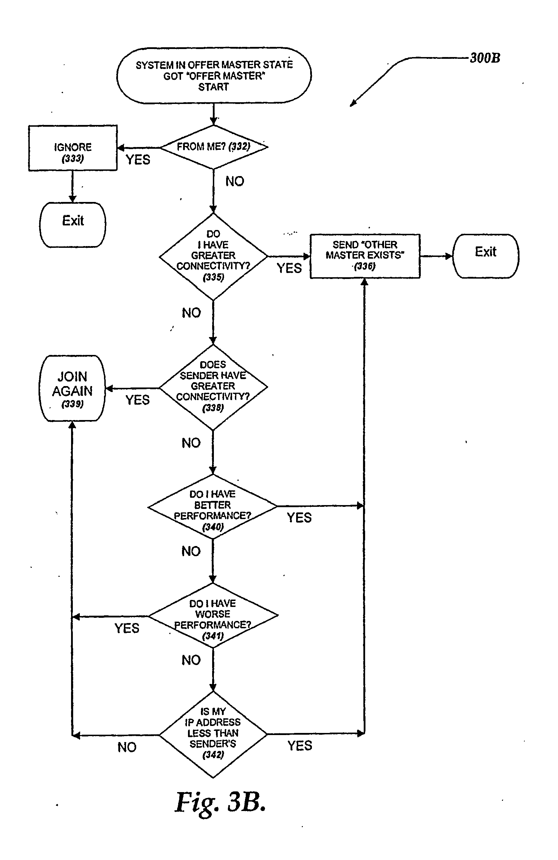

At block 304, the joining network device sends out an "offer master" request packet on the protocol network, offering to become the cluster master. In one embodiment, the "offer master" request is broadcast over the protocol network. The "offer master" request may also include the joining network device's connectivity information. If the joining network device receives an "other master exists" message, processing loops back to block 302, where the joining network device tries to join again. The "other master exists" message may arise where another cluster master already exists, a better cluster candidate master has already offered to become cluster master, or the like. One embodiment of a process for determining the "better candidate master" is described in more detail below in conjunction with FIGURE 3B.

However, if the joining network device does not receive a response after a predetermined period of time, processing flows to block 305. In one embodiment, the predetermined period of time is about 100 milliseconds. However, the invention is not so limited, and virtually any period of time may be employed.

At block 305, the cluster master sends a broadcast Address Resolution Protocol (ARP) response, or the like, on each of its cluster networks, to inform adjacent network devices what hardware address (for example, an Ethernet MAC address), and the like, to use for a corresponding cluster network address. Processing continues to block 306, where the joining network device now operates in the capacity of the cluster master. Processing may continue, until the cluster master receives an "exit request," in which instance, processing loops back to block 302, where the network device may try to rejoin the cluster.

Similarly, at block 306, if a cluster master gets a "master keepalive" message, such as where another cluster member may be acting as the cluster master, processing flows to decision block 307.

At decision block 307, the cluster master makes a determination whether the "master keepalive" message originated from itself. Normally, a cluster master does not receive its own keepalive messages, however should for example, an external router, or the like, on an adjacent network be misconfigured, this event could occur unexpectedly. Thus, if the cluster master determines that the "master keepalive" message is from itself, processing returns to block 306.

If, however, at decision block 307, the cluster master determines that the "master keepalive" message did not originate from itself, the cluster master concludes that there is another cluster member that is behaving as the cluster master. Processing branches, then, to decision block 308, where the cluster master attempts to resolve the master contention ("tie"). One embodiment of a process for resolving this "tie breaker" master contention is described in more detail below in conjunction with FIGURES 3A-3E. If the tie is resolved in favor of this cluster master, processing flows to block 309.

If, at decision block 308, the cluster master loses the tie-breaker, processing branches to block 321, where the cluster master sends an "exit request" message to the cluster members. The cluster master may further leave the cluster. Processing may then loop back to block 302, where the leaving cluster master may attempt to rejoin the cluster to try to stabilize the cluster, and the like.

At block 309, the cluster master sends an "other master exists" message to the other master. Additionally, the cluster master may send a broadcast Address Resolution Protocol (ARP) response, or the like, to tell anyone on the network what hardware address (such as an Ethernet MAC address) to employ for the cluster network address. This may be performed to address any issues that may arise where the other master may have done the same. Process 300A then loops back to block 306, where processing continues as described above, with a single cluster member selected to operate as the cluster master, and the other cluster members understanding themselves to be merely members of the cluster, each with the same connectivity.

FIGURE 3B illustrates a flow diagram generally showing one embodiment of a process when a cluster candidate master receives an "offer master" message, as described briefly above at block 304 of FIGURE 3A.

Process 300B begins, after a start block, at decision block 332, where a determination is made by the cluster candidate master to see whether the "offer master" message is from itself. If the "offer master" message is from itself, processing branches to block 333 where the message is ignored. Process 300B then returns to the calling process to perform other actions.

If, however, the "offer master" message is from another network device, processing proceeds to decision block 335, where the candidate master compares its connectivity against the sender's connectivity. In one embodiment, this may be achieved by examining the connectivity information in the received "offer master" message. However, the invention is not so limited, and connectivity information may be received by another message, mechanism, and the like. In any event, at decision block 335, the determination is whether the candidate master has greater connectivity, as described above, than the sending network device.

If it is determined, at decision block 335, that the candidate master does have greater connectivity, processing branches to block 336, where the candidate master sends an "other master exists" message to the other network device. Processing then exits to the calling process to perform other actions.

However, if, at decision block 335, the candidate master does not have greater connectivity than the sending network device, processing flows to decision block 338.

At decision block 338, a determination is made by the candidate master whether the sending network device has greater connectivity than its own. If so, processing branches to block 339, where the candidate cluster master gives up trying to become a master. In one embodiment, the "ex-candidate" cluster master tries to join the cluster again, in part, by entering process 300A of FIGURE 3A.

If the sending network device does not have greater connectivity than the candidate master does, processing proceeds to decision block 340, where the candidate master employs a system performance analysis to attempt to break the tie. System performance may be evaluated based on a variety of mechanisms, including but not limited to throughput, load, processing configuration, and the like. The invention, however, is not constrained to employing system performance analysis, and virtually any other mechanism to break the tie may be employed without departing from the scope of the invention. However, as used in process 300B, if the candidate master does have better system performance than the sending network device, processing branches to block 336, where the candidate master sends an "other master exists" message to the other network device. Processing then exists to the calling process to perform other actions.

If, at decision block 340, the candidate master does not have better system performance, processing proceeds to decision block 341, where the candidate cluster master determines whether the sending network device has better system performance. If the sending network device has better system performance, the candidate cluster master gives up trying to become a cluster master. Processing branches to block 339, where the "ex-candidate" cluster master tries to join the cluster again by exiting to process 300A of FIGURE 3A.

However, if, at decision block 340, the sending network device's performance is the same as the candidate master's performance then processing branches to decision block 342, where another tie-breaker mechanism is employed. In one embodiment, the other tie-breaker includes comparing network addresses of the candidate cluster master to the sending network device. If the candidate cluster master's network address is lower than the network address of the sending network device, processing branches to block 336, where the candidate cluster master sends an "other master exists" message to the other network device. Processing then exists to the calling process to perform other actions.

If, at decision block 342, candidate cluster master's network address is not less than the network address of the sending network device, processing branches to block 339, where the now "ex-candidate" cluster master gives up trying to become a cluster master. In one embodiment, the ex-candidate cluster master may try to join the cluster again by exiting process 300B and entering process 300A of FIGURE 3A.

### Illustrative Operation of a Cluster Master

After a cluster has formed, the cluster master may continue to monitor the connectivity of existing cluster members, and accept new cluster members that have matching connectivity. How these events are handled will now be described with reference to FIGURES 4A-4E.

FIGURE 4A illustrates a flow diagram generally showing one embodiment of a process for when the cluster master receives a client "keepalive" message. After a cluster has formed, the cluster master monitors "keepalive" messages sent from cluster members. In one embodiment, the cluster master employs a watchdog timer. However, the invention is not so constrained, and virtually any mechanism may be employed to monitor for "keepalive" messages.

In any event, a cluster member may be considered "alive" so long as the cluster master receives its keepalive messages. Each cluster member may also include its connectivity information in its keepalive messages. The cluster master determines whether the connectivity information is uniform for all cluster members and adjusts the membership accordingly.

Process 400A of FIGURE 4A begins, after a start block, at decision block 402, where the cluster master determines whether the sender of the keepalive is one of the members of its cluster. If not, then processing branches to block 403, where the cluster master may send an "exit cluster" request to the sender. Moreover, the cluster master may discard the keepalive message from the exiting sender. Upon completion of block 403, processing may exit to a calling process to perform other actions.

If, at decision block 402, the sender of the keepalive is a cluster member, processing branches to decision block 404, where the cluster master determines whether the connectivity information for the cluster member has changed. The cluster master may have stored the connectivity information for the cluster member from a previous keepalive message, from the cluster member's join request message, or the like. In any event, the cluster master compares the keepalive message's associated connectivity information against its stored information to see if it has changed. If the connectivity information for the cluster member has changed, processing branches to block 405; otherwise, processing branches to block 411.

At block 405, the cluster master updates its stored information for the cluster member. Processing next flows to decision block 406, where a determination is made whether the connectivity for all the current cluster members is uniform. If the connectivity information indicates that the connectivity for all the cluster members is uniform, processing flows to decision block 407; otherwise, processing branches to decision block 409.

At decision block 407, a determination is made whether the cluster master's connectivity timer is running. If the cluster master's connectivity timer is not running, processing proceeds to block 411; otherwise processing branches to block 408, where the cluster master stops the connectivity timer. Processing continues next to block 411.

At decision block 409, a determination is made whether a cluster master's connectivity timer is running. If the connectivity timer is running, processing branches to block 411; otherwise processing moves to block 410, where the cluster master starts the connectivity timer. Processing then flows to block 411.

At block 411, the cluster master proceeds to process information associated with the cluster member's keepalive message. For example, in one embodiment, the cluster master may determine packet loss average based in part on employing a sequence number associated with a keepalive message, an adaptive keepalive interval, and the like. Processed information may then be stored by the cluster master.

Processing next flows to block 412, where the cluster master may reset a watchdog timer associated with the current cluster member. In one embodiment, the cluster master utilizes a connectivity timer to delay cluster membership changes until the cluster master has received all connectivity change events from its cluster members. However, the invention is not so limited. For example, in another embodiment of the invention, the cluster master could make cluster membership changes immediately in response to a cluster member connectivity change. If equipment failure causes the same connectivity loss on more than one cluster member, this embodiment may converge to the same cluster membership as the prior embodiment. However, the cluster may undergo a greater number of membership changes than the prior embodiment in this situation. In any event, upon completion of block 412, processing exits to the calling process to perform other actions.

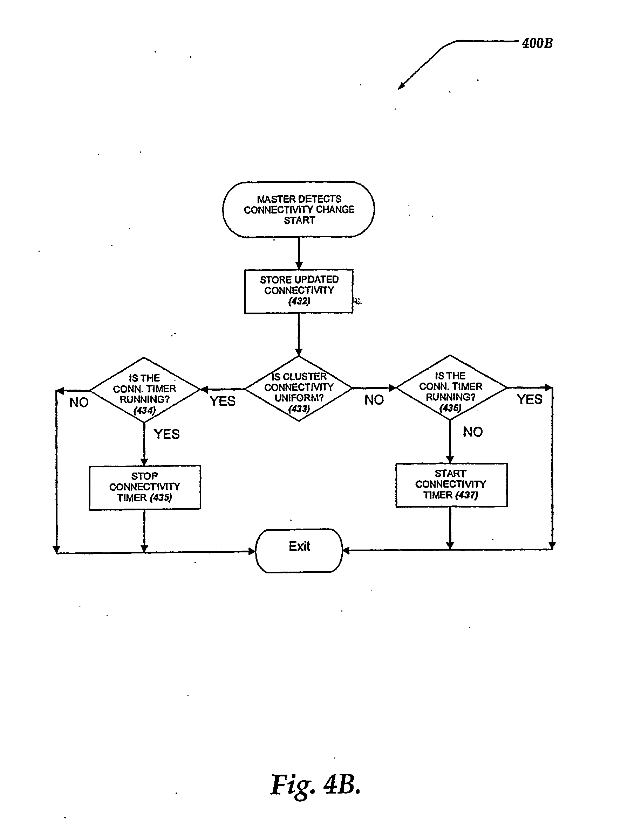

FIGURE 4B illustrates a flow diagram generally showing one embodiment of a process for when the cluster master detects a change in its own connectivity. Process 400B of FIGURE 4B begins, after a start block, at block 432, where the cluster master stores its updated connectivity information for a later comparison.

Processing next proceeds to decision block 433, where a determination is made whether the connectivity for all cluster members is uniform. In one embodiment, the cluster master takes its updated connectivity information into account. If the connectivity is uniform, processing flows to decision block 434; otherwise, processing flows to decision block 436.

At decision block 436, a determination is made whether the cluster master's connectivity timer is running. If it is running, processing exits to a calling process to perform other actions. Otherwise, processing branches to block 437, where the cluster master starts the connectivity timer. Processing then exits to the calling process to perform other actions.

At decision block 434, a determination is made whether the cluster master's connectivity timer is running. If it is not running, processing exits to the calling process to perform other actions. Otherwise, processing branches to block 435, where the cluster master stops the connectivity timer. Upon completion of block 435, processing then exits to the calling process to perform other actions.

In one embodiment, the invention utilizes a connectivity timer to delay cluster membership changes until the cluster master has received substantially all similar connectivity change events from its cluster members. However, the invention is not so limited. For example, in another embodiment of the invention, the cluster master may make cluster membership changes virtually immediately in response to a connectivity change. This approach however, may converge to the same cluster membership as the above embodiment. However, the cluster may undergo a greater number of membership changes than the above embodiment.

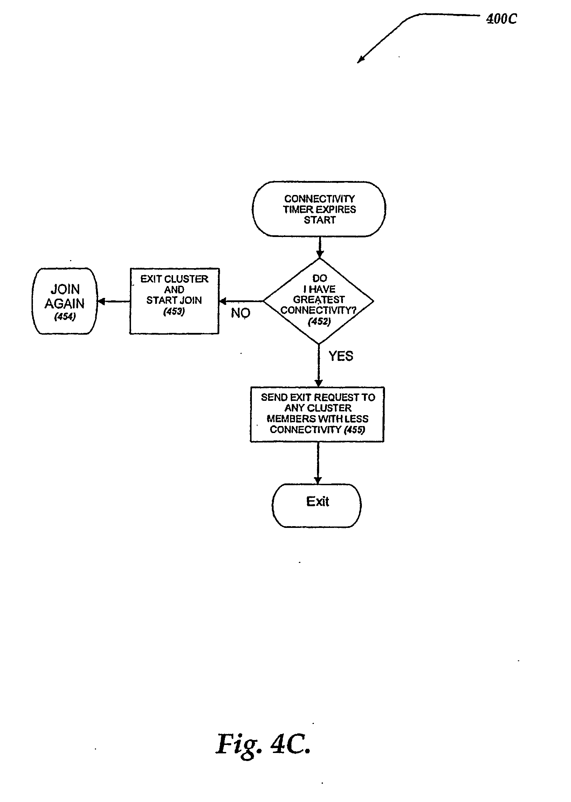

FIGURE 4C illustrates a flow diagram generally showing one embodiment of a process for when the cluster master's connectivity timer expires. Process 400C of FIGURE 4C begins, after a start block, at decision block 452, where a determination is made by the cluster master as to whether it has greater or equal connectivity than all of the cluster members. If not, processing proceeds to block 453; otherwise, processing branches to block 455.

At block 453, the master concludes that it cannot reach a network that other cluster members can reach, and therefore the cluster master, itself, should not be in the cluster. The cluster master sends an "exit request" message to the cluster members, and then leaves the cluster. In one embodiment, the "ex-cluster master" may attempt to rejoin the cluster by, exiting through block 454 to process 300A of FIGURE 3A. The cluster may then reform, with the network device with the best connectivity as the new cluster master.

If, at block 455, the cluster master has greater or equal connectivity than all of the cluster members, the master determines whether any of its cluster members has less connectivity than itself. If so, it sends an exit request to those cluster members, forcing them to leave the cluster. The exiting cluster members may then attempt to rejoin. In one embodiment, the exiting cluster members may be unable to rejoin the cluster until their connectivity is at least equal to the master's, as described below. In any event, upon completion of block 455, processing exits to a calling process to perform other actions.

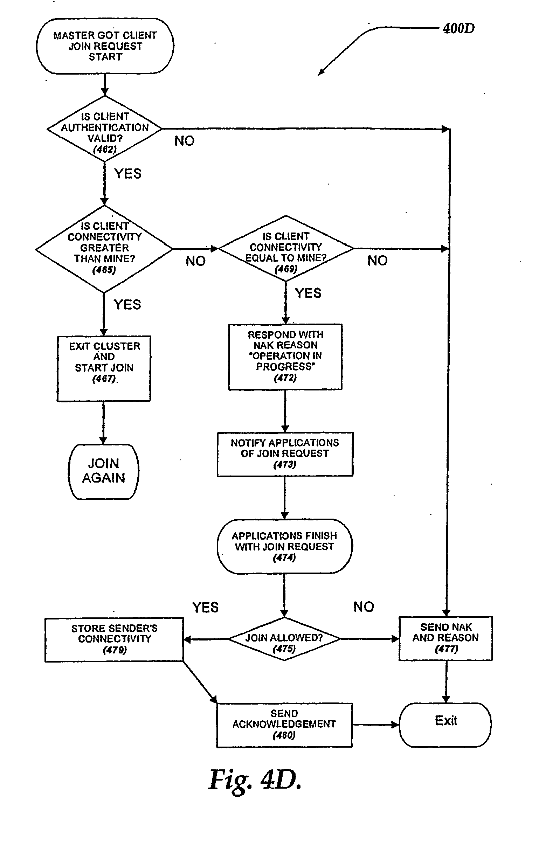

FIGURE 4D illustrates a flow diagram generally showing one embodiment of a process for when the cluster master receives a client's (network device) "join request" message. This "join request" message may include an authentication certificate, or the like, obtained from a valid certificate authority, as well as connectivity information about the sender network device.

Process 400D of FIGURE 4D begins, after a start block, at decision block 462, where, when the cluster master receives the "join request" message, it validates the sender network device's authentication information by, in part, checking the certificate against a list of valid certificates. If the cluster master finds no match processing branches to block 477, where the cluster master may send a NAK, a "joined failed" message, or the like, to the sender network device associated with the "join request," to indicate the join has failed. Processing then exits to the calling process to perform other actions.

If, at decision block 462, the cluster master does match the certificate from the join message with a certificate it may hold, processing proceeds to decision block 465. At decision block 465, the cluster master compares its connectivity against the sender network device's connectivity, in part, by examining the connectivity information in the "join request" message, or the like. The cluster master may first determine, at decision block 465, whether the sender network device has greater connectivity than it does. If so, processing proceeds to block 467, where it concludes that the joining network device should be cluster master of the cluster. At block 467, the current cluster master may send an "exit request" message to all existing cluster members of the cluster. The current cluster master may then leave the cluster, and attempt to rejoin the cluster, by exiting to process 300A of FIGURE 3A. The cluster may then reform, with the network device with the best connectivity as the new cluster master.

If, however, at decision block 465, the cluster master determines that the sender network device's connectivity is not greater than its own, processing branches to decision block 469. At decision block 469, the cluster master attempts to determine whether the sender network device's connectivity is equal to its own connectivity. If not, then it concludes that the sender does not have connectivity to all the networks that existing cluster members have, and should not be in the cluster. Processing proceeds to block 477, where the cluster master then may send a NAK, a "joined failed" message, or the like, to the sender network device associated with the "join request," to indicate the join has failed. Upon completion of block 477, processing returns to the calling process to perform other actions.

If, at decision block 469, the sender network device's connectivity is equal to the cluster master's connectivity, processing branches to block 472. At block 472, the cluster master tells the network device to wait, in part, by sending a NAK, or the like, with an "operation in progress" reason message, and the like.

Processing continues next to block 473, where the cluster master notifies an application, and the like, that a network device is trying to join the cluster. This notification is for any application that may want to know about a potential joining to the cluster. For example, this may arise when IPSec is one of the applications. IPSec may want to validate the requesting network device before agreeing to let it join the cluster. Thus, processing continues to block 474, where the application may be provided an opportunity to finish with the join request analysis.

Processing then continues to decision block 475, where a determination is made whether any application has rejected the join request. If an application has rejected the joint request, processing branches to block 477, where the cluster master may send a NAK, a "joined failed" message, or the like, perhaps with a reason for the rejection. Processing then exits to the calling process to perform other actions.

If, at decision block 475, substantially all the relevant applications approve the join request, processing branches to block 479, where the cluster master adds the sender network device as a cluster member. The cluster master may further store the sender network device's connectivity information. Processing flows next to block 480, where the cluster master may also send an ACK, an "OK to join" message, or the like. Upon completion of block 480, processing exits process 400D to the calling process to perform other actions.

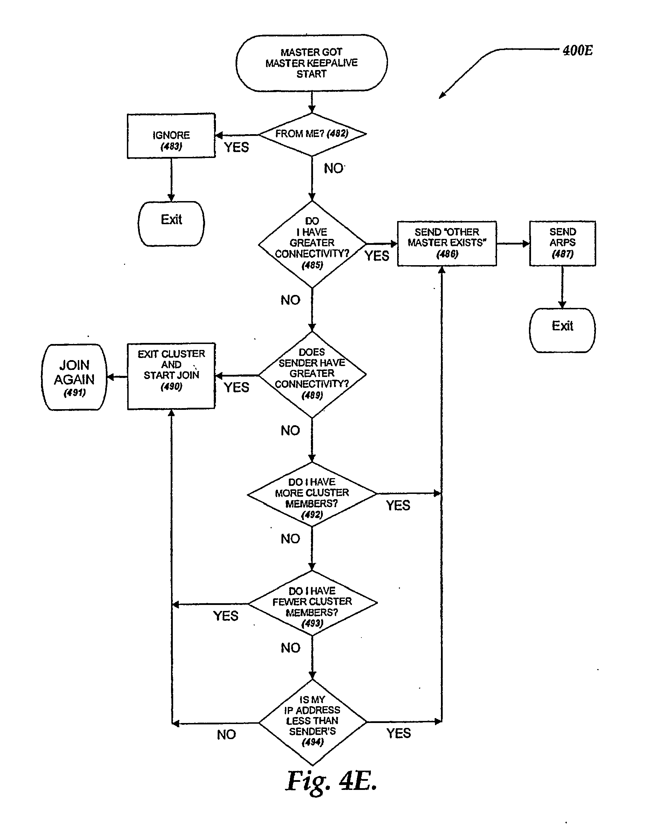

FIGURE 4E illustrates a flow diagram generally showing one embodiment of a process for when the cluster master receives a "master keepalive" message. Process 400E is directed towards describing one possible "tie-breaker" mechanism when two cluster members claim to be the cluster master. In one embodiment, the "master keepalive" message includes the sender network device's connectivity information, a cluster member list, the adaptive keepalive interval, a current set of work assignments for each cluster member, and the like. However, the invention is not limited to this information, and more or less information may be associated with the master keepalive message, without departing from the scope of the invention.

Process 400E of FIGURE 4E is first entered when a cluster master receives a "master keepalive" message. The process begins, after a start block, at decision block 482, where a determination is made whether the received message is from itself. If it is, processing proceeds to block 483, where the received keepalive message is ignored. Processing then exits to a calling process to perform other actions.

If, at decision block 482, it is determined that the "master keepalive" message is from another network device, processing branches to decision block 485, where the cluster master compares its connectivity against the sender network device's connectivity. This may be performed, in part, by examining the connectivity information associated with the received message.

At decision block 485, the cluster master may first make a determination whether it has greater connectivity than the sender network device. If so, processing proceeds to block 486, where the cluster master sends an "other master exists" message to the other network device. Processing continues to block 487, where the cluster master may send a broadcast Address Resolution Protocol (ARP) response, or the like, to tell anyone on the network what hardware address (such as an Ethernet MAC address) to use for the cluster IP address. Processing then exits to a calling process to perform other actions.

If, at decision block 485, it is determined that the cluster master does not have greater connectivity than the sender network device, processing branches to decision block 489, where the cluster master makes a determination whether the sender network device has greater connectivity than its own. If so, the cluster master concludes that the other network device can reach more networks than it can, and should therefore be the cluster master. Processing branches to block 490, where the cluster master may send an "exit request" message, or the like, to its cluster members. Moreover, the cluster master may leave the cluster, and try to join the cluster again by exiting through block 491 to process 300A of FIGURE 3A.

If, at decision block 489, it is determined that the sender network device does not have greater connectivity than the cluster master, processing continues to decision block 492, where the cluster master then determines whether it has more cluster members than the sender network device. This may be achieved, for example, by examining a number of cluster members in the "master keepalive" message, or the like. In any event, if the cluster master does have more members, processing branches to block 486, where the cluster master may send an "other master exists" message to the other network device, as described above.

However, if at decision block 492, it is determined that the cluster master does not have more cluster members, processing continues to decision block 493, where a determination is made whether the sender network device has more cluster members in its cluster. If so, the cluster master concludes that the other network device should be cluster master. Processing branches to block 490, where the current cluster master leaves the cluster, as described above.

If, however, at decision block 493, the cluster master determines that it and the sender network device have the same number of cluster members, processing proceeds to decision block 494, where the cluster master compares network addresses with the sender network device as a possible tie-breaker. However, the invention is not limited to comparing network addresses, and virtually any other tie-breaker mechanism may be employed without departing from the scope of the invention. In any event, in one embodiment, at block 494, the cluster master determines whether its network address on the network that the keepalive was received on is less than the source network address of the received "master keepalive" message. If so, processing branches to block 486, as described above; otherwise the cluster master loses the tie-breaker, and processing branches to block 490, where the cluster master leaves the cluster by branching to block 490, as described above.

### Illustrative Operation of a Cluster Member

After a cluster has formed, each non-master cluster member (client) may send a keepalive message to the cluster master. In one embodiment, the keepalive message includes the non-master cluster member's connectivity information. In another embodiment, the keepalive message is communicated to the cluster master periodically. The frequency of the keepalive messages may be determined based on any of a variety of mechanisms, including, but not limited to basing the frequency adaptively on a keepalive message associated from the cluster master.

In addition, each client member may send a client keepalive message whenever they detect a connectivity change. This message is directed towards expediting processing on the cluster master, typically which is notified of the change before it can determine a new cluster membership.

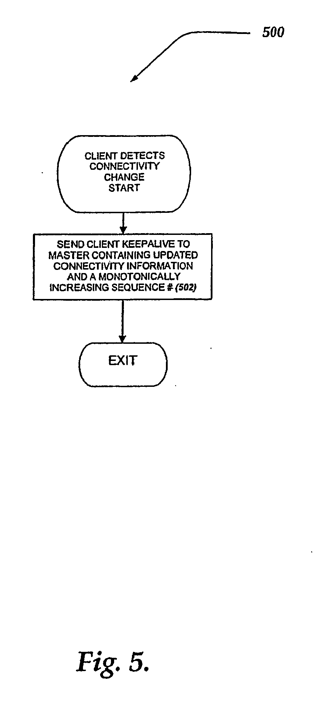

FIGURE 5 illustrates a flow diagram generally showing one embodiment of a process of a cluster member (client) managing a connectivity communication with the cluster master, according to one embodiment of the invention.

Process 500 of FIGURE 5 begins, after a start block, when the cluster member sends a keepalive message that includes its updated connectivity information. In one embodiment, the keepalive message is sent employing a monotonically increasing sequence number for packet loss calculation. Upon completion of block 502, processing exits to a calling process to perform other actions.

It will be understood that each block of the flowchart illustrations discussed above, and combinations of blocks in the flowchart illustrations above, can be implemented by computer program instructions. These program instructions may be provided to a processor to produce a machine, such that the instructions, which execute on the processor, create means for implementing the actions specified in the flowchart block or blocks. The computer program instructions may be executed by a processor to cause a series of operational steps to be performed by the processor to produce a computer-implemented process such that the instructions, which execute on the processor, provide steps for implementing the actions specified in the flowchart block or blocks.

Accordingly, blocks of the flowchart illustration support combinations of means for performing the specified actions, combinations of steps for performing the specified actions and program instruction means for performing the specified actions. It will also be understood that each block of the flowchart illustration, and combinations of blocks in the flowchart illustration, can be implemented by special purpose hardware-based systems which perform the specified actions or steps, or combinations of special purpose hardware and computer instructions.

The above specification, examples, and data provide a complete description of the manufacture and use of the composition of the invention. Since many embodiments of the invention can be made without departing from the scope of the invention, the invention resides in the claims hereinafter appended.

## Claims

1. A network device (200) for managing a network failure in a cluster system, comprising:
a transceiver (210) configured to send and to receive information; and
**characterized by** a processor (242), coupled to the transceiver, configured to:
receive connectivity information associated with another network device; and
if the received connectivity information is substantially different from a set of connectivity information associated with the cluster system, deny cluster membership to the other network device.

2. The network device of claim 1, wherein the processor (242) is further configured to:
determine another connectivity information associated with the other network device; and
if the determined other connectivity information associated with the other network device is substantially different from the set of connectivity information associated with the cluster system, exit the cluster system.

3. The network device of claim 2, wherein the processor (242) is further configured to:
if the determined other connectivity information associated with the network device (200) is substantially different, send an exit message to the cluster system.

4. The network device of claim 1, wherein the processor (242) is further configured to:
receive connectivity information comprising information that identifies a network and whether the other network device has connectivity to the identified network.

5. The network device of claim 4, wherein identification of the network further comprises at least one of a network address, and a network mask length.

6. The network device of claim 1, wherein the processor (242) is further configured to perform actions, further comprising:
determining, based, in part, on the received connectivity information, if the other network device is configured for the same set of networks as the cluster system;
determining, based, in part, on the received connectivity information, if the other network device has connectivity to the same set of networks as the cluster system; and
if the other network device is configured for a different set of networks than the cluster system or has connectivity to a different set of networks than the cluster system, marking the received connectivity information as substantially different from the cluster system.

7. The network device of claim 1, wherein denying cluster membership to the other network device further comprises at least one of denying a request to join the cluster system from the other network device, and requesting the other network device to exit the cluster system.

8. The network device of claim1, wherein the processor (242) is configured to perform actions, further comprising employing a connectivity timer to delay making a change to the membership of the cluster system.

9. The network device of claim 1, wherein the processor (242) is configured to perform actions, further comprising:
receiving a message from a third network device indicating that the third network device is attempting to operate as a cluster master to the cluster system;
if the network device (200) has greater connectivity than the third network device, sending a response indicating that another master exits to the third network device;
if the network device has substantially a same connectivity as the third network device and if the network device has more cluster members than the third network device, sending the response indicating that another master exits to the third network device; and
if the network device (200) has substantially the same connectivity as the third network device and if the network device has substantially the same cluster members as the third network device, and if a network address associated with the network device is substantially less than a network address associated with the third network device, sending the response indicating that another master exits to the third network device.

10. The network device of claim 9, wherein the processor (242) is configured to perform actions, further comprising:
if the network device (200) has substantially the same connectivity as the third device and if the network device has substantially better system performance than the third network device, sending the response indicating that another master exits to the third network device.

11. A method for managing a network failure in a cluster system (100), comprising:
receiving connectivity information associated with a network device (102 - 105); and
if the received connectivity information is substantially different from a set of connectivity information associated with the cluster system, denying cluster membership to the network device.

12. The method of claim 11, wherein the received connectivity information further comprises information that identifies a network (106, 107) and whether the network device has connectivity to the identified network,

13. The method of claim 11, wherein denying cluster membership to the network device further comprises at least one of denying a request to join the cluster system (100) from the network device, and requesting the network device to exit the cluster system.

14. A system for managing a network failure in a cluster system (100), comprising:
a network device (102 -105) configured to perform actions, comprising:
sending a request to join the cluster system; and
sending connectivity information associated with the network device; and **characterized by**
a cluster master (102 - 105) that is configured to perform actions, comprising:
receiving the connectivity information associated with the network device; and
if the received connectivity information is substantially different from a set of connectivity information associated with the cluster system, denying cluster membership to the network device.

15. The system claim 14, wherein the cluster master (102 - 105) is further configured to perform actions, further comprising:
determining, based, in part, on the received connectivity information, if the network device (102 -105) is configured for the same set of networks as the cluster system (100);
determining, based, in part, on the received connectivity information, if the network device has connectivity to the same set of networks as the cluster system: and
if the network device is configured for a different set of networks than the cluster system or has connectivity to a different set of networks than the cluster system, marking the received connectivity information as substantially different from the cluster system.

16. The system claim 14, wherein denying cluster membership to the network device further comprises requesting the other network device to exit the cluster system.

17. The system claim 14, wherein the cluster master (102 - 105) is configured to perform actions, further comprising employing a connectivity timer to delay making a change to the membership of the cluster system.

18. The system claim 14, wherein the cluster master (102 - 105) is configured to perform actions, further comprising:
receiving a message from another network device, indicating that the other network device is attempting to operate as a cluster master to the cluster system;
if the cluster master has greater connectivity than the other device, sending a response indicating that another master exits to the other network device;
if the cluster master has substantially a same connectivity as the other network device and if the cluster master has more cluster members than the other network device, sending the response indicating that another master exits to the other network device; and
if the cluster master has substantially the same connectivity as the other network device and if the cluster master has substantially the same cluster members as the other network device, and if a network address associated with the cluster master is substantially less than a network address associated with the other network device, sending the response indicating that another master exits to the other network device.

19. The system of claim 14, wherein the network device (102 - 105) is configured to perform actions, further comprising:
detecting a change in its connectivity;
updating the connectivity information associated with the network device; and
sending the updated connectivity information towards the cluster master.

20. The system of claim 19, wherein sending the updated connectivity information further comprises sending the updated connectivity information within a keepalive message, wherein a monotonically increasing sequence number is associated with the keepalive message to enable packet loss calculation.

21. An apparatus for managing a failure in a cluster system (101), comprising:
a means for receiving connectivity information associated with a network device (102-105);
**characterized by**
a means for determining if the received connectivity information is substantially different from a set of connectivity information associated with the cluster system (101); and
if the received connectivity information is substantially different from a set of connectivity information associated with the cluster system, employing a means for denying cluster membership to the network device.

22. An apparatus (102 - 105), comprising:
a receiver configured to receive connectivity information associated with a network device in a cluster system, and further configured, if the received connectivity information is substantially different from a set of connectivity information associated with the cluster system, to deny cluster membership to the network device.

## Patentansprüche

1. Netzvorrichtung (200) für das Management eines Netzfehlers in einem Cluster-System, die umfasst:
einen Sender/Empfänger (210), der konfiguriert ist, um Informationen zu senden und zu empfangen;
**gekennzeichnet durch**
einen Prozessor (242), der mit dem Sender/Empfänger gekoppelt ist und konfiguriert ist, um:
Konnektivitätsinformationen, die einer weiteren Netzvorrichtung zugeordnet sind, zu empfangen; und
falls die empfangenen Konnektivitätsinformationen von einer Gruppe von Konnektivitätsinformationen, die dem Cluster-System zugeordnet sind, wesentlich verschieden sind, die Cluster-Mitgliedschaft der anderen Netzvorrichtung abzulehnen.

2. Netzvorrichtung nach Anspruch 1, wobei der Prozessor (242) ferner konfiguriert ist, um:
weitere Konnektivitätsinformationen, die der anderen Netzvorrichtung zugeordnet sind, zu bestimmen; und
falls die bestimmten anderen Konnektivitätsinformationen, die der anderen Netzvorrichtung zugeordnet sind, von der Gruppe von Konnektivitätsinformationen, die dem Cluster-System zugeordnet sind, wesentlich verschieden sind, das Cluster-System zu verlassen.

3. Netzvorrichtung nach Anspruch 2, wobei der Prozessor (242) ferner konfiguriert ist, um:
falls die bestimmten anderen Konnektivitätsinformationen, die der Netzvorrichtung (200) zugeordnet sind, wesentlich verschieden sind, eine Austrittsnachricht zu dem Cluster-System zu senden.

4. Netzvorrichtung nach Anspruch 1, wobei der Prozessor (242) ferner konfiguriert ist, um:
Konnektivitätsinformationen zu empfangen, die Informationen, die ein Netz identifizieren, und Informationen bezüglich der Tatsache, ob die andere Netzvorrichtung Konnektivität mit dem identifizierten Netz hat, enthalten.

5. Netzvorrichtung nach Anspruch 4, wobei die Identifizierung des Netzes ferner eine Netzadresse und/oder eine Netzmaskenlänge umfasst.

6. Netzvorrichtung nach Anspruch 1, wobei der Prozessor (242) ferner konfiguriert ist, um Aktionen auszuführen, die ferner umfassen:
Bestimmen, ob die andere Netzvorrichtung für dieselbe Gruppe von Netzen wie das Cluster-System konfiguriert ist, teilweise auf der Grundlage der empfangenen Konnektivitätsinformationen;
Bestimmen, ob die andere Netzvorrichtung Konnektivität zu derselben Gruppe von Netzen wie das Cluster-System hat, teilweise auf der Grundlage der empfangenen Konnektivitätsinformationen; und
falls die andere Netzvorrichtung für eine andere Gruppe von Netzen als das Cluster-System konfiguriert ist oder eine Konnektivität mit einer anderen Gruppe von Netzen als das Cluster-System hat, Markieren der empfangenen Konnektivitätsinformationen als wesentlich verschieden von dem Cluster-System.

7. Netzvorrichtung nach Anspruch 1, wobei das Ablehnen der Cluster-Mitgliedschaft der anderen Netzvorrichtung ferner das Ablehnen einer Anforderung zum Beitreten zu dem Cluster-System von der anderen Netzvorrichtung und/oder das Auffordern der anderen Netzvorrichtung, das Cluster-System zu verlassen, umfasst.

8. Netzvorrichtung nach Anspruch 1, wobei der Prozessor (242) konfiguriert ist, um Aktionen auszuführen, die ferner das Verwenden eines Konnektivitätszeitgebers umfassen, um das Ausführen einer Änderung an der Mitgliedschaft des Cluster-Systems zu verzögern.

9. Netzvorrichtung nach Anspruch 1, wobei der Prozessor (242) konfiguriert ist, um Aktionen auszuführen, die ferner umfassen:
Empfangen einer Nachricht von einer dritten Netzvorrichtung, die angibt, dass die dritte Netzvorrichtung versucht, als ein Cluster-Master für das Cluster-System zu arbeiten;
falls die Netzvorrichtung (200) eine höhere Konnektivität hat als die dritte Netzvorrichtung, Senden einer Antwort, die angibt, dass ein weiterer Master austritt, zu der dritten Netzvorrichtung;
falls die Netzvorrichtung im Wesentlichen dieselbe Konnektivität wie die dritte Netzvorrichtung hat und falls die Netzvorrichtung mehr Cluster-Mitglieder hat als die dritte Netzvorrichtung, Senden der Antwort, die angibt, dass ein weiterer Master austritt, zu der dritten Netzvorrichtung; und
falls die Netzvorrichtung (200) im Wesentlichen dieselbe Konnektivität hat wie die dritte Netzvorrichtung und falls die Netzvorrichtung im Wesentlichen dieselben Cluster-Elemente besitzt wie die dritte Netzvorrichtung und falls eine Netzadresse, die der Netzvorrichtung zugeordnet ist, wesentlich kleiner als eine Netzadresse ist, die der dritten Netzvorrichtung zugeordnet ist, Senden der Antwort, die angibt, dass ein weiterer Master austritt, zu der dritten Netzvorrichtung.

10. Netzvorrichtung nach Anspruch 9, wobei der Prozessor (242) konfiguriert ist, um Aktionen auszuführen, die ferner umfassen:
falls die Netzvorrichtung (200) im Wesentlichen dieselbe Konnektivität hat wie die dritte Netzvorrichtung und falls die Netzvorrichtung eine wesentlich bessere Systemleistung besitzt als die dritte Netzvorrichtung, Senden der Antwort, die angibt, dass ein weiterer Master austritt, zu der dritten Netzvorrichtung.

11. Verfahren für das Management eines Netzfehlers in einem Cluster-System (100), das umfasst:
Empfangen von Konnektivitätsinformationen, die einer Netzvorrichtung (102-105) zugeordnet sind; und
falls die empfangenen Konnetivitätsinformationen von einer Gruppe von Konnektivitätsinformationen, die dem Cluster-System zugeordnet sind, wesentlich verschieden sind, Ablehnen der Cluster-Mitgliedschaft der Netzvorrichtung.

12. Verfahren nach Anspruch 11, wobei die empfangenen Konnektivitätsinformationen ferner Informationen, die ein Netz (106, 107) identifizieren, und Informationen bezüglich der Tatsache, ob die Netzvorrichtung Konnektivität zu dem identifizierten Netz hat, enthalten.

13. Verfahren nach Anspruch 11, wobei das Ablehnen der Cluster-Mitgliedschaft der Netzvorrichtung ferner das Verweigern einer Anforderung, dem Cluster-System (100) beizutreten, von der Netzvorrichtung und/oder das Auffordern der Netzvorrichtung, das Cluster-System zu verlassen, umfasst.

14. System für das Management eines Netzfehlers in einem Cluster-System (100), das umfasst:
eine Netzvorrichtung (102-105), die konfiguriert ist, um Aktionen auszuführen, die umfassen:
Senden einer Anforderung, um dem Cluster-System beizutreten; und
Senden von Konnektivitätsinformationen, die der Netzvorrichtung zugeordnet sind;
**gekennzeichnet durch**
einen Cluster-Master (102-105), der konfiguriert ist, um Aktionen auszuführen, die umfassen:
Empfangen der Konnektivitätsinformationen, die der Netzvorrichtung zugeordnet sind; und
falls die empfangenen Konnektivitätsinformationen von einer Gruppe von Konnektivitätsinformationen, die dem Cluster-System zugeordnet sind, wesentlich verschieden sind, Ablehnen der Cluster-Mitgliedschaft der Netzvorrichtung.

15. System nach Anspruch 14, wobei der Cluster-Master (102-105) ferner konfiguriert ist, um Aktionen auszuführen, die ferner umfassen:
Bestimmen, ob die Netzvorrichtung (102-105) für dieselbe Gruppe von Netzen wie das Cluster-System (100) konfiguriert ist, wenigstens teilweise auf der Grundlage der empfangenen Konnektivitätsinformationen;
Bestimmen, ob die Netzvorrichtung Konnektivität mit derselben Gruppe von Netzen wie das Cluster-System hat, teilweise auf der Grundlage der empfangenen Konnektivitätsinformationen; und
falls die Netzvorrichtung für eine andere Gruppe von Netzen als das Cluster-System konfiguriert ist oder Konnektivität mit einer anderen Gruppe von Netzen als das Cluster-System hat, Markieren der empfangenen Konnektivitätsinformationen als wesentlich verschieden von dem Cluster-System.

16. System nach Anspruch 14, wobei das Ablehnen der Cluster-Mitgliedschaft für die Netzvorrichtung ferner das Auffordern der anderen Netzvorrichtung, das Cluster-System zu verlassen, umfasst.

17. System nach Anspruch 14, wobei der Cluster-Master (102-105) konfiguriert ist, um Aktionen auszuführen, die ferner das Verwenden eines Konnektivitätszeitgebers umfassen, um das Ausführen einer Änderung an der Mitgliedschaft des Cluster-Systems zu verzögern.

18. System nach Anspruch 14, wobei der Cluster-Master (102-105) konfiguriert ist, um Aktionen auszuführen, die ferner umfassen:
Empfangen einer Nachricht von einer weiteren Netzvorrichtung, die angibt, dass die andere Netzvorrichtung versucht, als ein Cluster-Master für das Cluster-System zu arbeiten;
falls der Cluster-Master eine höhere Konnektivität hat als die andere Vorrichtung, Senden einer Antwort, die angibt, dass der andere Master austritt, zu der anderen Netzvorrichtung;
falls der Cluster-Master im Wesentlichen die gleiche Konnektivität wie die andere Netzvorrichtung hat und falls der Cluster-Master mehr Cluster-Elemente als die andere Netzvorrichtung hat, Senden der Antwort, die angibt, dass der weitere Master austritt, zu der anderen Netzvorrichtung; und
falls der Cluster-Master im Wesentlichen die gleiche Konnektivität hat wie die andere Netzvorrichtung und falls der Cluster-Master im Wesentlichen dieselben Cluster-Elemente wie die andere Netzvorrichtung hat und falls eine Netzadresse, die dem Cluster-Master zugeordnet ist, wesentlich kleiner ist als eine Netzadresse, die der anderen Netzvorrichtung zugeordnet ist, Senden der Antwort, die angibt, dass ein weiterer Master austritt, zu der anderen Netzvorrichtung.

19. System nach Anspruch 14, wobei die Netzvorrichtung (102-105) konfiguriert ist, um Aktionen auszuführen, die ferner umfassen:
Detektieren einer Änderung ihrer Konnektivität;
Aktualisieren der Konnektivitätsinformationen, die der Netzvorrichtung zugeordnet sind; und
Senden der aktualisierten Konnektivitätsinformationen zu dem Cluster-Master.

20. System nach Anspruch 19, wobei das Senden der aktualisierten Konnektivitätsinformationen ferner das Senden der aktualisierten Konnektivitätsinformationen in einer Lebenserhaltungsnachricht umfasst, wobei der Lebenserhaltungsnachricht eine monoton steigende Folgennummer zugeordnet ist, um eine Paketverlustberechnung zu ermöglichen.

21. Vorrichtung für das Management eines Fehlers in einem Cluster-System (101), die umfasst:
ein Mittel, um Konnektivitätsinformationen zu empfangen, die einer Netzvorrichtung (102-105) zugeordnet sind;
**gekennzeichnet durch**
ein Mittel, um zu bestimmen, ob die empfangenen Konnektivitätsinformationen von einer Gruppe von Konnektivitätsinformationen, die dem Cluster-System (101) zugeordnet sind, wesentlich verschieden sind; und
wobei dann, wenn die empfangenen Konnektivitätsinformationen von einer Gruppe von Konnektivitätsinformationen, die dem Cluster-System zugeordnet sind, wesentlich verschieden sind, ein Mittel verwendet wird, um die Cluster-Mitgliedschaft für die Netzmitgliedschaft abzulehnen.

22. Vorrichtung (102-105), die umfasst:
einen Empfänger, der konfiguriert ist, um Konnektivitätsinformationen zu empfangen, die einer Netzvorrichtung in einem Cluster-System zugeordnet sind, und ferner konfiguriert ist, um dann, wenn die empfangenen Konnektivitätsinformationen von einer Gruppe von Konnektivitätsinformationen, die dem Cluster-System zugeordnet sind, wesentlich verschieden sind, die Cluster-Mitgliedschaft für die Netzvorrichtung abzulehnen.

## Revendications

1. Dispositif de réseau (200) destiné à gérer une défaillance de réseau dans un système de grappe, le dispositif comportant :
un émetteur-récepteur (210) configuré de manière à envoyer et recevoir des informations ; et
**caractérisé par** un processeur (242), couplé à l'émetteur-récepteur, configuré de manière à :
recevoir des informations de connectivité associées à un autre dispositif de réseau ; et
si les informations de connectivité reçues sont sensiblement distinctes d'un ensemble d'informations de connectivité associées au système de grappe, refuser l'abonnement de la grappe à l'autre dispositif de réseau.

2. Dispositif de réseau selon la revendication 1, dans lequel le processeur (242) est en outre configuré de manière à :
déterminer d'autres informations de connectivité associées à l'autre dispositif de réseau ; et
si les autres informations de connectivité déterminées associées à l'autre dispositif de réseau sont sensiblement distinctes de l'ensemble d'informations de connectivité associées au système de grappe, sortir du système de grappe.

3. Dispositif de réseau selon la revendication 2, dans lequel le processeur (242) est en outre configuré de manière à :
si les autres informations de connectivité déterminées associées au dispositif de réseau (200) sont sensiblement distinctes, envoyer un message de sortie au système de grappe.

4. Dispositif de réseau selon la revendication 1, dans lequel le processeur (242) est en outre configuré de manière à :
recevoir des informations de connectivité comportant des informations qui identifient un réseau et qui indiquent si l'autre dispositif de réseau présente une connectivité au réseau identifié.

5. Dispositif de réseau selon la revendication 4, dans lequel l'identification du réseau comporte en outre au moins l'identification de l'une parmi une adresse de réseau et une longueur de masque de réseau.

6. Dispositif de réseau selon la revendication 1, dans lequel le processeur (242) est en outre configuré de manière à exécuter des actions, comportant en outre les étapes ci-dessous consistant à :
déterminer, en partie sur la base des informations de connectivité reçues, si l'autre dispositif de réseau est configuré pour le même ensemble de réseaux que le système de grappe ;
déterminer, en partie sur la base des informations de connectivité reçues, si l'autre dispositif de réseau présente une connectivité au même ensemble de réseaux que le système de grappe ; et
si l'autre dispositif de réseau est configuré pour un ensemble de réseaux différent du système de grappe ou présente une connectivité à un ensemble de réseaux différent du système de grappe, marquer les informations de connectivité reçues en tant que sensiblement distinctes du système de grappe.

7. Dispositif de réseau selon la revendication 1, dans lequel le refus de l'abonnement de la grappe à l'autre dispositif de réseau comporte en outre au moins l'une des étapes consistant à refuser une demande de rattachement au système de grappe en provenance de l'autre dispositif de réseau, et demander à l'autre dispositif de réseau de sortir du système de grappe.

8. Dispositif de réseau selon la revendication 1, dans lequel le processeur (242) est configuré de manière à exécuter des actions, comportant en outre l'étape consistant à utiliser un temporisateur de connectivité en vue de retarder la mise en oeuvre d'une modification de l'abonnement du système de grappe.

9. Dispositif de réseau selon la revendication 1, dans lequel le processeur (242) est configuré de manière à exécuter des actions, comportant en outre les étapes ci-dessous consistant à :
recevoir un message en provenance d'un troisième dispositif de réseau indiquant que le troisième dispositif de réseau tente de fonctionner en tant que grappe maîtresse pour le système de grappe ;
si le dispositif de réseau (200) présente une connectivité supérieure à celle du troisième dispositif de réseau, envoyer une réponse indiquant la sortie d'une autre grappe maîtresse au troisième dispositif de réseau ;
si le dispositif de réseau présente une connectivité sensiblement identique à celle du troisième dispositif de réseau et si le dispositif de réseau présente un nombre d'abonnés supérieur à celui du troisième dispositif de réseau, envoyer la réponse indiquant la sortie d'une autre grappe maîtresse au troisième dispositif de réseau ; et
si le dispositif de réseau (200) présente sensiblement la même connectivité que le troisième dispositif de réseau, et si le dispositif de réseau présente sensiblement le même nombre d'abonnés de grappe que le troisième dispositif de réseau, et si une adresse de réseau associée au dispositif de réseau est sensiblement inférieure à une adresse de réseau associée au troisième dispositif de réseau, envoyer la réponse indiquant la sortie d'une autre grappe maîtresse au troisième dispositif de réseau.

10. Dispositif de réseau selon la revendication 9, dans lequel le processeur (242) est configuré de manière à exécuter des actions, comportant en outre les étapes ci-dessous consistant à :
si le dispositif de réseau (200) présente sensiblement la même connectivité que le troisième dispositif et si le dispositif de réseau présente des performances système sensiblement supérieures à celles du troisième dispositif de réseau, envoyer la réponse indiquant la sortie d'une autre grappe maîtresse au troisième dispositif de réseau.

11. Procédé pour gérer une défaillance de réseau dans un système de grappe (100), comportant les étapes ci-dessous consistant à :
recevoir des informations de connectivité associées à un dispositif de réseau (102-105); et
si les informations de connectivité reçues sont sensiblement distinctes d'un ensemble d'informations de connectivité associées au système de grappe, refuser l'abonnement de la grappe au dispositif de réseau.

12. Procédé selon la revendication 11, dans lequel les informations de connectivité reçues comportent en outre des informations qui identifient un réseau (106, 107) et qui identifient si le dispositif de réseau présente une connectivité au réseau identifié.

13. Procédé selon la revendication 11, dans lequel le refus de l'abonnement de la grappe au dispositif de réseau comporte en outre au moins l'une des étapes consistant à refuser une demande de rattachement au système de grappe (100) émanant du dispositif de réseau, et demander au dispositif de réseau de sortir du système de grappe.

14. Système destiné à gérer une défaillance de réseau dans un système de grappe (100), comportant :
un dispositif de réseau (102 - 105) configuré de manière à exécuter des actions, comportant les étapes ci-dessous consistant à :
envoyer une demande de rattachement au système de grappe ; et
envoyer des informations de connectivité associées au dispositif de réseau ; et **caractérisé par**
une grappe maîtresse (102 - 105) qui est configurée de manière à exécuter des actions, comportant les étapes ci-dessous consistant à :
recevoir les informations de connectivité associées au dispositif de réseau ; et
si les informations de connectivité reçues sont sensiblement distinctes d'un ensemble d'informations de connectivité associées au système de grappe, refuser l'abonnement de la grappe au dispositif de réseau.

15. Système selon la revendication 14, dans lequel la grappe maîtresse (102 - 105) est en outre configurée de manière à exécuter des actions, comportant en outre les étapes ci-dessous consistant à :
déterminer, en partie sur la base des informations de connectivité reçues, si le dispositif de réseau (102 - 105) est configuré pour le même ensemble de réseaux que le système de grappe (100) ;
déterminer, en partie sur la base des informations de connectivité reçues, si le dispositif de réseau présente une connectivité au même ensemble de réseaux que le système de grappe : et
si le dispositif de réseau est configuré pour un ensemble de réseaux différent du système de grappe ou présente une connectivité à un ensemble de réseaux différent du système de grappe, marquer les informations de connectivité reçues en tant que sensiblement distinctes du système de grappe.

16. Système selon la revendication 14, dans lequel le refus de l'abonnement de la grappe au dispositif de réseau comporte en outre l'étape consistant à demander à l'autre dispositif de réseau de sortir du système de grappe.

17. Système selon la revendication 14, dans lequel la grappe maîtresse (102 - 105) est configurée de manière à exécuter des actions, comportant en outre l'étape consistant à utiliser un temporisateur de connectivité en vue de retarder la mise en oeuvre d'une modification de l'abonnement du système de grappe.

18. Système selon la revendication 14, dans lequel la grappe maîtresse (102 - 105) est configurée de manière à exécuter des actions, comportant en outre les étapes ci-dessous consistant à :
recevoir un message en provenance d'un autre dispositif de réseau, indiquant que l'autre dispositif de réseau tente de fonctionner en tant que grappe maîtresse pour le système de grappe ;
si la grappe maîtresse présente une connectivité supérieure à celle de l'autre dispositif, envoyer une réponse indiquant la sortie d'une autre grappe maîtresse à l'autre dispositif de réseau ;
si la grappe maîtresse présente une connectivité sensiblement identique à celle de l'autre dispositif de réseau et si la grappe maîtresse présente un nombre d'abonnés supérieur à celui de l'autre dispositif de réseau, envoyer la réponse indiquant la sortie d'une autre grappe maîtresse à l'autre dispositif de réseau ; et
si la grappe maîtresse présente sensiblement la même connectivité que l'autre dispositif de réseau et si la grappe maîtresse présente sensiblement le même nombre d'abonnés de grappe que l'autre dispositif de réseau, et si une adresse de réseau associée à la grappe maîtresse est sensiblement inférieure à une adresse de réseau associée à l'autre dispositif de réseau, envoyer la réponse indiquant la sortie d'une autre grappe maîtresse à l'autre dispositif de réseau.

19. Système selon la revendication 14, dans lequel le dispositif de réseau (102 - 105) est configuré de manière à exécuter des actions, comportant en outre les étapes ci-dessous consistant à :
détecter une modification dans sa connectivité ;
mettre à jour les informations de connectivité associées au dispositif de réseau ; et
envoyer les informations de connectivité mises à jour vers la grappe maîtresse.

20. Système selon la revendication 19, dans lequel l'étape consistant à envoyer les informations de connectivité mises à jour comporte en outre l'étape consistant à envoyer les informations de connectivité mises à jour dans un message d'entretien, dans lequel un nombre de séquences croissant est associé au message d'entretien pour permettre le calcul des pertes de paquets.

21. Dispositif destiné à gérer une défaillance dans un système de grappe (101), comportant :
un moyen pour recevoir des informations de connectivité associées à un dispositif de réseau (102 - 105) ;
**caractérisé par**
un moyen pour déterminer si les informations de connectivité reçues sont sensiblement distinctes d'un ensemble d'informations de connectivité associées au système de grappe (101); et
si les informations de connectivité reçues sont sensiblement distinctes d'un ensemble d'informations de connectivité associées au système de grappe, le dispositif emploie un moyen permettant de refuser l'abonnement de la grappe au dispositif de réseau.

22. Dispositif (102 - 105), comportant :
un récepteur configuré de manière à recevoir des informations de connectivité associées à un dispositif de réseau dans un système de grappe, et en outre configuré, si les informations de connectivité reçues sont sensiblement distinctes d'un ensemble d'informations de connectivité associées au système de grappe, pour refuser l'abonnement de la grappe au dispositif de réseau.
